# EUROPEAN PATENT APPLICATION

(11) **EP 1 172 310 A1**
(43) Date of publication of application: **16.01.2002**
(21) Application number: 01116171.8
(22) Date of filing: 04.07.2001
(51) Int. Cl.: B65G 15/02, B65G 15/36, B66B 21/10, B66B 23/10

(54) **Flexible belt and conveyor and escalator system using such a flexible belt**

(30) Priority: 07.07.2000 JP 2000206738; 07.07.2000 JP 2000206739
(71) Applicant: Ishikawajima Transport Machinery Co., Ltd., Tokyo 104-0044 (JP)
(72) Inventor: Okano, Shigeru, c/oIshikawajima Trans.Mach.Co.Ltd., Tokyo 104-0044 (JP); Teramoto, Katsuya, Numazu-shi, Shizuoka-ken, 410-0312 (JP); Saruyama, Shinichi, Numazu-shi, Shizuoka-ken, 410-0312 (JP)
(74) Representative: LOUIS, PÖHLAU, LOHRENTZ & SEGETH

(57) **Abstract**

The flexible belt includes an outer flexible layer (21) adapted to receive an object to be conveyed, an intermediate flexible layer (22,23) provided with internal reinforcement members (T) extending transversely relative to the belt and arranged in a moving direction of the belt and an inner flexible layer (24) provided with internal longitudinal members (L) extending in the moving direction of the belt. The inner flexible layer (24) having one of its surfaces thereof held in tight contact with a transversely central part of the intermediate flexible layer (22,23).

## Description

### BACKGROUND OF THE INVENTION

### 1. Field of the invention

The present invention relates to a flexible belt, a conveyor system using such a flexible belt and an escalator system using such a flexible belt.

### 2. Detailed Description of the Related Art

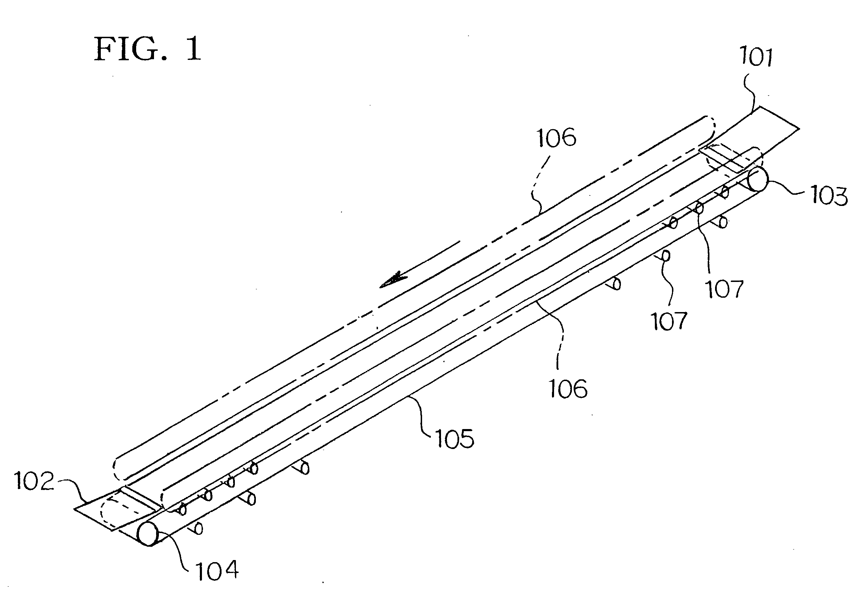

FIG. 1 schematically illustrates an example of a conventional moving walkway. Referring to FIG. 1, the moving walkway includes an entrance step 101 arranged at the upstream end as viewed in the direction of moving pedestrians, an exit step 102 arranged at the downstream end as viewed in the same direction, an upstream pulley 103 arranged below the entrance step 101, a downstream pulley arranged below the exit step 102 and an endless conveyor belt 105 wound around the pulleys 103 and 104 to provide a walkway between the two steps 101 and 102.

The moving walkway additionally includes a plurality of rollers 107 normally arranged at regular intervals between the two pulleys 103 and 104 to support the conveyor belt 105 from underneath in both the carrier side moving path and the return side moving path.

With the above described known moving walkway, the conveyor belt 105 is driven to move and round by means of the two pulleys 103 and 104 in such a way that the carrier side of the conveyor belt 105 moves at a constant speed from the entrance step 101 to the exit step 102.

Furthermore, the moving walkway is provided with lateral hand rails (not shown) extending along the entire length of the carrier side moving path of the conveyor belt 105 at a height substantially equal to that of the waists of the pedestrians using the deck. Each of the hand rails is equipped with an endless hand belt 106 that is adapted to move and round on the top surface of the hand rail in the carrier side moving path at the same constant speed as that of the conveyor belt 105. In the return side moving path the hand belts are located inside the respective hand rails.

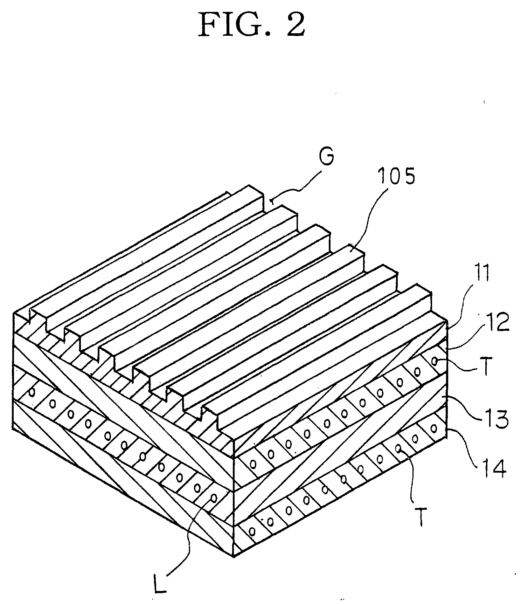

FIG. 2 schematically illustrates the structure of the conveyor belt 105.

Referring to FIG. 2, the conveyor belt 105 is composed of a first flexible layer 11, a second flexible layer 12, a third flexible layer 13 and a fourth flexible layer 14. The first flexible layer 11 is provided on one of the surfaces thereof with grooves G arranged at regular intervals and extending in the moving direction of the belt. The second flexible layer 12 is provided with internal reinforcement members T extending transversely relative to the belt and arranged at regular intervals in the moving direction of the belt. One of the surfaces of the second flexible layer 12 is held in tight contact with the other surface of the first flexible layer 11. The third flexible layer 13 is provided with highly flexible and length-inalternable, internal longitudinal members L extending in the moving direction of the belt and arranged at regular intervals in the transversal direction relative to the belt. One of the surfaces of the third flexible layer 13 is held in tight contact with the other surface of the second flexible layer 12. The fourth flexible layer 14 is provided with internal reinforcement members T extending transversely relative to the belt and arranged at regular intervals in the moving direction of the belt. One of the surfaces of the fourth flexible layer 14 is held in tight contact with the other surface of the third flexible layer 13.

The flexible layers 11, 12, 13, and 14 are normally made of a rubber type material so that the conveyor belt 105 may sufficiently bend when it turns from the carrier side moving path to the return side moving path and vice versa.

The width, the intervals and the depth of the grooves G are so selected that the conveyor belt 105 shows a profile that matches the comb-shaped profile (not shown) of the entrance step 101 and that of the exit step 102. Thus, the comb-shaped sections of the steps 101, 102 tightly engage with the grooves G to prevent the conveyor belt 105 from taking up foreign objects.

Additionally, the reinforcement members T and the longitudinally extending members L are formed of steel wires. The reinforcement members T are adapted to suppress the downward deflection of the transversely central part relative to the lateral edges of the belt, while the longitudinally extending members L are adapted to maintain the tensile strength of the belt in the rounded moving direction thereof.

In recent years, efforts have been paid to apply moving walkways to elevators that can replace pedestrian bridges and steps in railway stations from the barrier-free point of view.

However, the conveyor belt 105 cannot be turned round laterally because it contains longitudinally extending members L extending in the moving direction of the belt arranged transversely relative to the belt at regular intervals in the third flexible layer 13 thereof.

In other words, the moving walkway of FIG. 1 inevitably has to show a straight carrier side moving path extending from the entrance step 101 to the exit step 102. This by turn tremendously limits the freedom of designing moving walkways.

When installing a moving walkway as shown in FIG. 1 between two points located at different levels for the convenience of wheel chair riders, the gradient of the conveyor belt 105 has to be less than that of the road for testing the stopping performance of wheel chairs. Differently stated, the moving walkway installed between two points located at different levels inevitably has a great length when the entrance step 101 and the exit step 102 shows a large level difference.

In view of the above identified circumstances, it is therefore an object of the present invention to provide a flexible belt that can be moved along a laterally curved track, a conveyor system applicable to a curved track and an escalator system applicable to a track connecting two points showing a level difference without requiring a large space for installation.

### SUMMARY OF THE INVENTION

In a first aspect of the invention, there is provided a flexible belt including an outer flexible layer adapted to receive an object to be conveyed on one of surfaces thereof, an intermediate flexible layer provided with internal reinforcement members extending transversely relative to the belt and arranged in a moving direction of the belt, the intermediate flexible layer having one of the surfaces thereof held in tight contact with the other surface of the outer flexible layer, and an inner flexible layer provided with internal longitudinal members extending in the moving direction of the belt, the inner flexible layer having one of the surfaces thereof held in tight contact with a transversely central part of the other surface of the intermediate flexible layer.

In a second aspect of the invention, there is provided a conveyor system including an endless conveyor belt provided with internal longitudinal members extending in a moving direction of the belt and arranged at a transversely central part thereof, a pair of pulleys arranged respectively at a conveyance starting point and a conveyance terminating point, the conveyor belt being wound around the pulleys, and a plurality of guide rollers arranged at necessary points between the conveyance starting point and the conveyance terminating point, the guide rollers being adapted to rotatably abut lateral edges of the conveyor belt so as to allow the belt to move along a curved track.

In a third aspect of the invention, there is provided a conveyor system including an endless conveyor belt having an outer flexible layer adapted to receive an object to be conveyed on one of surfaces thereof, an intermediate flexible layer provided with internal reinforcement members extending transversely relative to the belt and arranged in a moving direction of the belt, the intermediate flexible layer having one of the surfaces thereof held in tight contact with the other surface of the outer flexible layer, and an inner flexible layer provided with internal longitudinal members extending in the moving direction of the belt, the inner flexible layer having one of the surfaces thereof held in tight contact with a transversely central part of the other surface of the intermediate flexible layer, a pair of pulleys arranged respectively at a conveyance starting point and a conveyance terminating point, the conveyor belt being wound around the pulleys, and a plurality of guide rollers arranged at necessary points between the conveyance starting point and the conveyance terminating point, the guide rollers being adapted to rotatably abut lateral edges of the conveyor belt so as to allow the belt to move along a curved track.

In a fourth aspect of the invention, there is provided an escalator system comprising an endless conveyor belt provided with internal longitudinal members extending in a moving direction of the belt and arranged at a transversely central part thereof, a plurality of guide rollers, each being rotatably held in contact with a lateral edge of the conveyor belt, a plurality of support rollers abutting a lower surface of the conveyor belt, the guide rollers and the support rollers being arranged at positions adapted to guide the conveyor belt spirally from a lower entrance position to an upper exit position to form an upward moving path and also guide the conveyor belt spirally from an upper entrance position to a lower exit position to form a downward moving path, and a drive mechanism arranged at least at the lower entrance/exit positions or at the upper entrance/exit positions in order to drive the conveyor belt to move in the longitudinal direction thereof.

In a fifth aspect of the invention, there is provided an escalator system including an endless conveyor belt having an outer flexible layer adapted to receive an object to be conveyed on one of surfaces thereof, an intermediate flexible layer provided with internal reinforcement members extending transversely relative to the belt and arranged in a moving direction of the belt, the intermediate flexible layer having one of the surfaces thereof held in tight contact with the other surface of the outer flexible layer, and an inner flexible layer provided with internal longitudinal members extending in the moving direction of the belt, the inner flexible layer having one of the surfaces thereof held in tight contact with a transversely central part of the other surface of the intermediate flexible layer, a plurality of guide rollers, each being rotatably held in contact with lateral edges of the conveyor belt, a plurality of support rollers abutting a lower surface of the conveyor belt, the guide rollers and the support rollers being arranged at positions adapted to guide the conveyor belt spirally from a lower entrance position to an upper exit position to form an upward moving path and also guide the conveyor belt spirally from an upper entrance position to a lower exit position to form a downward moving path, and a drive mechanism arranged at least at the lower entrance/exit positions or at the upper entrance/exit positions in order to drive the conveyor belt to move in the longitudinal direction thereof.

As described above, the flexible belt as provided in the first aspect of the invention contains internal longitudinal members in the inner flexible layer thereof in order to maintain the tensile strength of the belt in the moving direction thereof that may be curved and secure the lateral flexibility of the belt.

The conveyor system as provided in the second aspect of the invention contains internal longitudinal members in a transversely central part of the conveyor belt thereof in order to maintain the tensile strength of the belt in the moving direction thereof that may be curved and secure the lateral flexibility of the belt. Additionally, the conveyor system includes a plurality of guide rollers abutting the lateral edges of the conveyor belt moving from a conveyance starting point to a conveyance terminating point to guide the conveyor belt along a curved track.

The conveyor system as provided in the third aspect of the invention contains internal longitudinal members in the inner flexible layer of the conveyor belt of the system in order to maintain the tensile strength of the belt in the moving direction thereof that may be curved and secure the lateral flexibility of the belt. Additionally, the conveyor system includes a plurality of guide rollers abutting the lateral edges of the conveyor belt moving from a conveyance starting point to a conveyance terminating point to guide the conveyor belt along a curved track.

The escalator system as provided in the fourth aspect of the invention contains internal longitudinal members in a transversely central part of the conveyor belt thereof in order to maintain the tensile strength of the belt in the moving direction thereof that may be curved and secure the lateral flexibility of the belt. Additionally, the escalator system includes a plurality of guide rollers and a plurality of support rollers for spirally guiding the conveyor belt from a lower entrance position to an upper exit position and from an upper entrance position to a lower exit position.

The escalator system as provided in the fifth aspect of the invention contains internal longitudinal members in the inner flexible layer of the conveyor belt of the system in order to maintain the tensile strength of the belt in the moving direction thereof that may be curved and secure the lateral flexibility of the belt. Additionally, the escalator system includes a plurality of guide rollers and a plurality of support rollers for spirally guiding the conveyor belt from a lower entrance position to an upper exit position and from an upper entrance position to a lower exit position.

### BRIEF DESCRIPTION OF THE DRAWINGS

FIG. 1 is a perspective view of a conventional moving walkway.
FIG. 2 is a cross sectional perspective view of the conveyor belt of FIG. 1, showing a part thereof.
FIG. 3 is a transversal cross sectional view of an embodiment of a flexible belt according to the invention.
FIG. 4 is a cross sectional perspective view of the flexible belt of FIG. 3, showing a part thereof.
FIG. 5 is a schematic plan view of an embodiment of a conveyor system according to the invention.
FIG. 6 is a schematic side view of a part of the conveyor system of FIG. 5.
FIG. 7 is a front view of one of the pulleys of FIG. 5.
FIG. 8 is a view showing an arrangement of some of the rollers of FIG. 5.
FIG. 9 is a perspective view of an embodiment of an escalator system according to the invention.
FIG. 10 is a plan view of FIG. 9.
FIG. 11 is a side view of the drive mechanism of FIG. 9.
FIG. 12 is a front view of one of the bend pulleys of FIG. 9.
FIG. 13 is a view showing an arrangement of the guide roller and the support rollers of FIG. 9.

### DETAILED DESCRIPTION OF THE PREFERRED EMBODIMENTS

Now, the present invention will be described in greater detail by referring to the accompanying drawings that illustrate preferred embodiments of the invention.

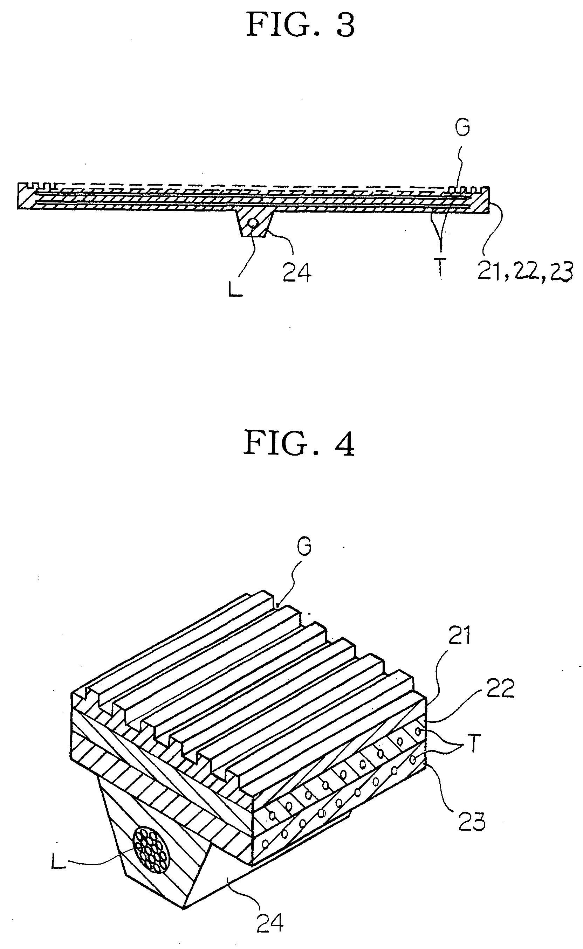

FIGS. 3 and 4 schematically illustrate an embodiment of a flexible belt according to the invention. In FIGS. 3 and 4, the components that are same as or similar to those of FIG. 2 are respectively denoted by the same reference symbols.

Referring to FIGS. 3 and 4, the flexible belt includes a first flexible layer 21, a second flexible layer 22, a third flexible layer 23, and a fourth flexible layer 24. The first flexible layer 21 is provided on one of the surfaces thereof with grooves G extending in the moving direction of the belt and arranged transversely at regular intervals. The second flexible layer 22 is provided with internal reinforcement members T extending transversely relative to the belt and arranged at regular intervals in the moving direction of the belt. The second flexible layer 22 has one of the surfaces thereof held in tight contact with the other surface of the first flexible layer 21. The third flexible layer 23 is provided with internal reinforcement members T extending transversely relative to the belt and arranged at regular intervals in the moving direction of the belt. The third flexible layer 23 has one of the surfaces thereof held in tight contact with the other surface of the second flexible layer 22. The fourth flexible layer 24 is provided with a plurality of highly flexible and length-inalternable, internal longitudinal members L extending in the moving direction of the belt. The fourth flexible layer 24 has one of the surfaces thereof held in tight contact with a transversely central part of the other surface of the third flexible layer 23.

The flexible layers 21, 22, 23, and 24 are made of a rubber type material, while the reinforcement members T and the longitudinal members L are formed of steel wires.

The plurality of internal longitudinal members L arranged in a transversely central part of the fourth flexible layer 24 may be arranged separately in parallel with each other, bundled together or twisted together as so many strands.

The reinforcement members T of the flexible belt of FIGS. 3 and 4 are adapted to suppress the downward deflection of the transversely central part relative to the lateral edges of the belt, while the longitudinally extending members L are adapted to maintain the tensile strength of the belt in the rounded moving direction thereof.

Additionally, the longitudinally extending members L are contained in the fourth flexible layer 24 that is located at the transversely central part of the flexible layers 21, 22, and 23 to secure- the lateral flexibility of the belt so that the flexible belt can turned laterally to move along a curved track.

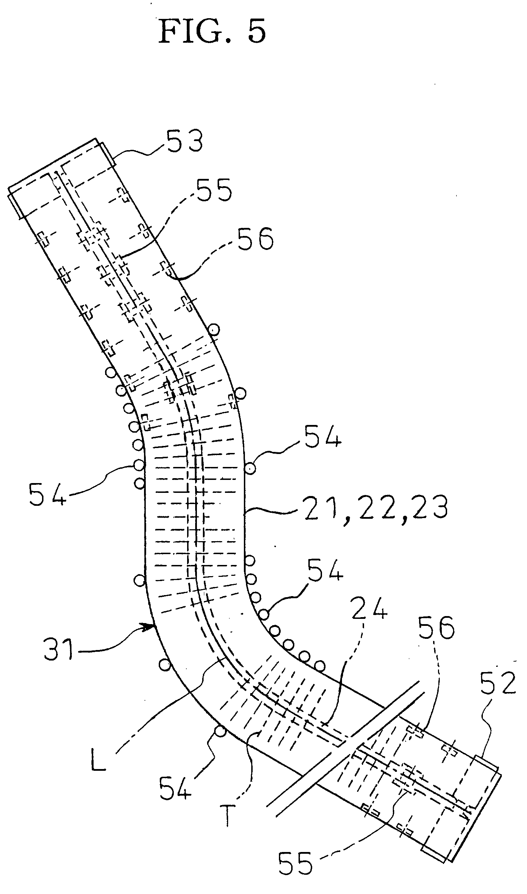

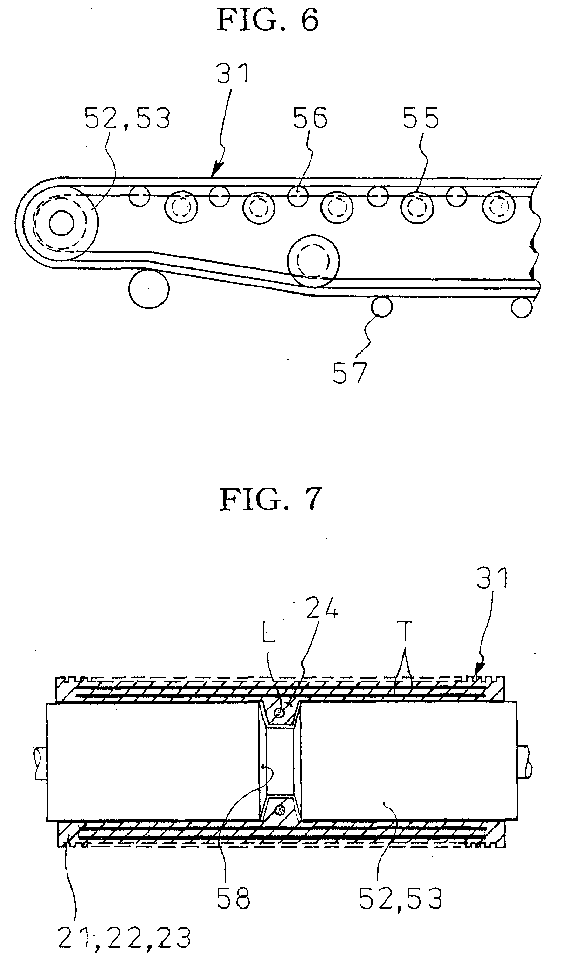

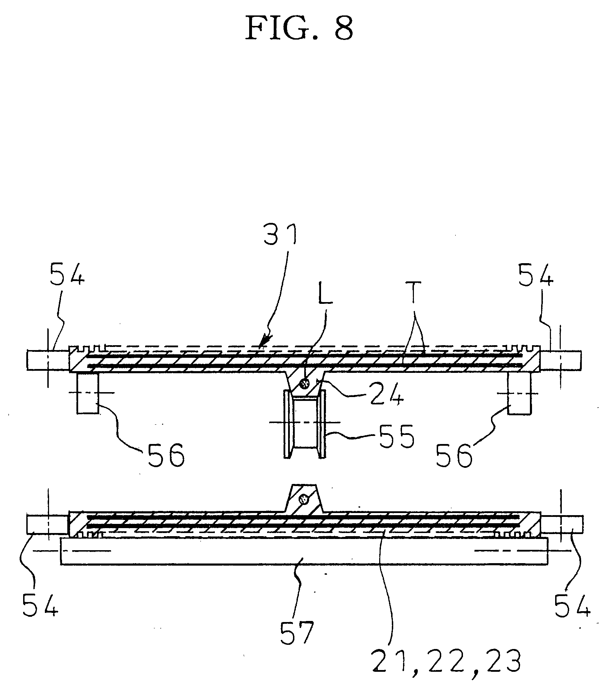

FIGS. 5 through 8 schematically illustrate an embodiment of a conveyor system according to the invention. In FIGS. 5 through 8, the components that are same as or similar to those of FIGS. 3 and 4 are denoted respectively by the same reference symbols.

The conveyor system comprises a conveyor belt 31, an upstream side pulley 52, a downstream side pulley 53, a plurality of guide rollers 54, a plurality of first support rollers 55, a plurality of second support rollers 56, and a plurality of return rollers 57. The conveyor belt 31 has a configuration same as the flexible belt of FIGS. 3 and 4. The upstream side pulley 52 is located at a conveyance starting point. The downstream side pulley 53 is located at a conveyance terminating point. The plurality of guide rollers 54 are arranged between the conveyance starting point and the conveyance terminating point in such a way that each of them rotatably abuts a lateral edge of the conveyor belt 31 from the corresponding side thereof. The plurality of first support rollers 55 rotatably abut the fourth flexible layer 24 of the conveyor belt 31 from underneath in the carrier side moving path. Each of the plurality of second support rollers 56 is adapted to rotatably abut a lateral area of the conveyor belt from underneath in the carrier side moving path. The plurality of return rollers 57 rotatably abut the conveyor belt 31 from underneath in the return side moving path.

Both the upstream side pulley 52 and the downstream side pulley 53 are provided in a transversely central part thereof with a peripheral groove 58 for receiving and engaging with the fourth flexible layer 24 of the conveyor belt 31 when the remaining peripheral surface of the pulleys are held in contact with the third flexible layer 23 of the conveyor belt 31.

The first support rollers 55 have a profile of a doubly flanged cylinder so that they may be held in contact with the fourth flexible layer 24 of the conveyor belt 31 to prevent the latter from moving laterally. The guide rollers 54 are arranged in such a way that both the carrier side moving path where the conveyor belt 31 moves from the upstream side pulley 52 to the downstream side pulley 53 and the return side moving path where the conveyor belt 31 moves from the downstream side pulley 53 to the upstream side pulley 52 are forced to meander by them.

In the conveyor system shown in FIGS. 5 through 8, as the downstream side pulley 53 is driven to move continuously, the part of the conveyor belt 31 located in the carrier side moving path is forced to move toward the conveyance terminating point as it is supported by the support rollers 55 and 56, while the part of the conveyor belt 31 located in the return side moving path is forced to move toward the conveyance starting point as it is supported by the return rollers 57.

As the conveyor belt 31 is driven to move, it is forced to meander by the guide rollers 54, each of which is abutting a lateral edge of the conveyor belt 31.

As described above, with the conveyor system shown in FIGS. 5 through 8, each of the plurality of guide rollers 54 is made to abut an edge of the conveyor belt 31 provided with a plurality of longitudinal members L located at a transversely central part thereof from the corresponding lateral side in order to force the conveyor belt 31 to turn laterally so that the carrier side moving path of the conveyor belt 31 can be made to meander. With such an arrangement, the freedom with which a conveyor system according to the invention is installed can be remarkably improved.

When the upstream side pulley 52 is driven to move and turn the endless conveyor belt 31, the rotary motion of the upstream side pulley 52 is transmitted to the conveyor belt 31 by means of the longitudinal members L in the fourth flexible layer 24 so that the flexible layers 21, 22, 23, and 24 are not subjected to any excessive force.

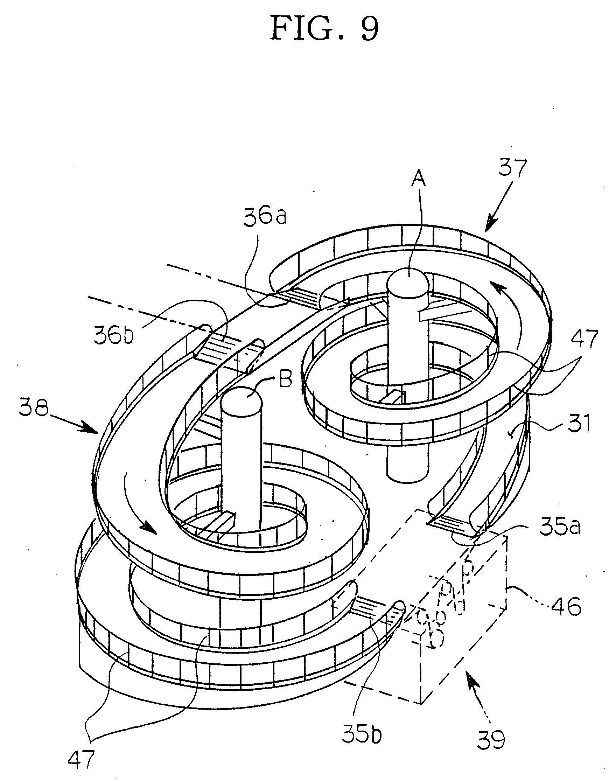

FIGS. 9 through 13 schematically illustrate an embodiment of an escalator system according to the invention. In FIGS. 9 through 13, the components same as or similar to those of FIGS. 3 through 8 are denoted respectively by the same reference symbols.

The escalator system includes an endless conveyor belt 31, a plurality of guide rollers 32, each of which is rotatably held in contact with a lateral edge of the conveyor belt 31, a plurality of first support rollers 33 and a plurality of second support rollers 34 abutting the lower surface of the conveyor belt 31, first entrance/exit steps 35a and 35b arranged respectively at the lower entrance/exit positions, second entrance/exit steps 36a and 36b arranged respectively at the upper entrance/exit positions, and a drive mechanism 39 for driving the conveyor belt 31 to move and turn in the longitudinal direction thereof.

The reinforcement members T of the flexible belt 31 are adapted to suppress the downward deflection of the transversely central part relative to the lateral edges of the belt, while the longitudinally extending members L are adapted to maintain the tensile strength of the belt in the rounded moving direction thereof.

Additionally, the longitudinally extending members L are contained in the fourth flexible layer 24 that is located transversely at the center of the flexible layers 21, 22, and 23 to secure the lateral flexibility of the belt so that the flexible belt can be turned laterally to move along a curved track.

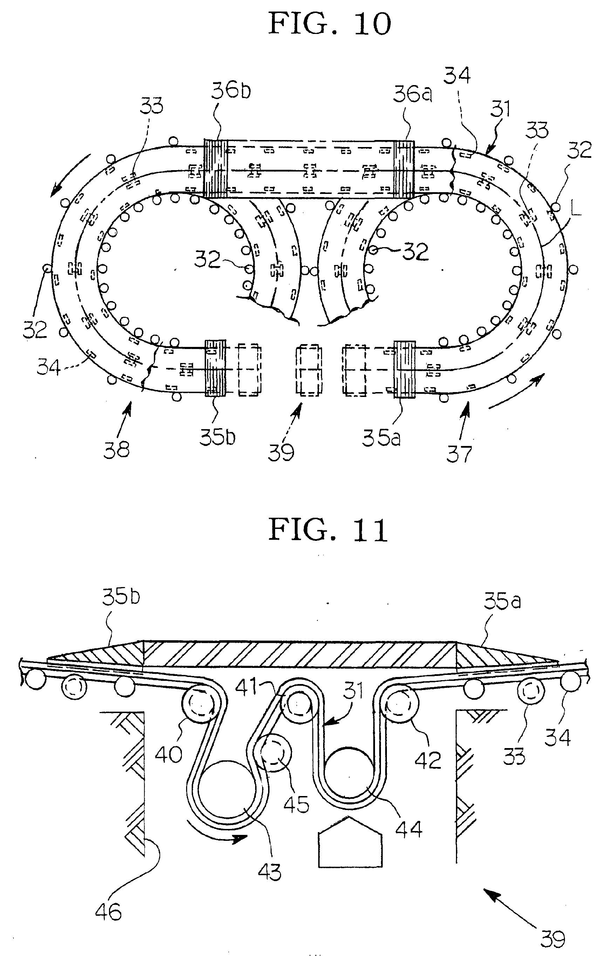

A necessary number of guide rollers 32 and support rollers 33, 34 are pivoted to support frame A in such a way that the conveyor belt 31 is guided spirally from a position right under the first entrance step 35a to a position right under the second exit step 36a to form an upward moving path 37. Similarly, a necessary number of guide rollers 32 and support rollers 33, 34 are pivoted to support frame B in such a way that the conveyor belt 31 is guided spirally from a position right under the second entrance step 36b to a position right under the first exit step 35b to form a downward moving path 38 (see FIGS. 9 and 10).

The first support rollers 33 are arranged at regular intervals so as to abut the fourth flexible layer 24 of the conveyor belt 31 from underneath (see FIG. 10). The first support rollers 33 have a profile of a doubly flanged cylinder so that they may be held in contact with the fourth flexible layer 24 of the conveyor belt 31 to prevent the latter from moving laterally.

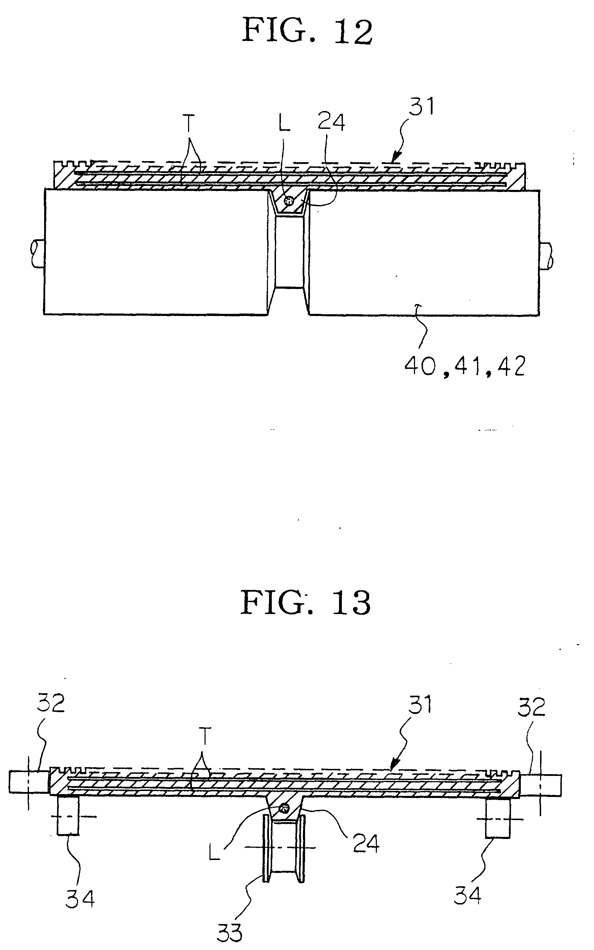

The second support rollers 34 have a short cylindrical profile and are arranged at regular intervals in such a way that each of them rotatably abuts a lateral area of the third flexible layer 23 of the conveyor belt 31 from underneath (see FIGS. 10 and 13).

The drive mechanism 39 is installed within a pit 46 arranged below the span between the first entrance/exit steps 35a and 35b.

The drive mechanism 39 includes three bend pulleys 40, 41, and 42 arranged in parallel with each other on a same level in the mentioned order from the upstream side toward the downstream side in the sense of the moving conveyor belt 31, another bend pulley 43 located at a position between and below the bend pulleys 40 and 41 and arranged in parallel with them, a take-up pulley 44 located at a position between and below the bend pulleys 41 and 42 and arranged in parallel with them, and a guide pulley located between the bend pulleys 41 and 43 and arranged in parallel with them. The conveyor belt 31 is wound around the bend pulleys 40, 41, 42, and 43, the take-up pulley 44 and the guide pulley 45.

Each of the bend pulleys 40, 41, and 42 has two large diameter sections adapted to abut the third flexible layer 23 of the conveyor belt 31 from underneath and prevent the fourth flexible layer 24 from moving laterally and a small diameter section arranged between the large diameter sections.

Thus, the conveyor belt 31 is provided with an initial tension by the take-up pulley 44 so that the conveyor belt 31 is pressed against the bend pulleys 40, 41, 42, and 43.

One of the bend pulleys 40 and 41 is linked to the rotary shaft of the motor (not shown) so that, as the motor is operated, the conveyor belt 31 is drive to move round and pass by the lower entrance/exit positions, the upward moving path 37, the upper entrance/exit positions, the downward moving path 38 and the lower entrance/exit positions.

The first entrance/exit steps 35a and 35b and the second entrance/exit steps 36a and 36b are provided with comb-shaped sections to be tightly engaged with the grooves G of the conveyor belt 31 in order to prevent the conveyor belt 31 from taking up foreign objects.

Additionally, the upward moving path 37 and the downward moving path 38 are provided with hand rails 47 extending along the entire length of the moving path at both sides thereof at a height substantially equal to that of the waists of the pedestrians using the deck. Each of the hand rails 47 is equipped with an endless hand belt that is adapted to move on the top surface of the hand rail in the carrier side moving path at the same constant speed as that of the conveyor belt 31. The hand belts are located inside the respective hand rails in the return side moving path.

With the escalator system of FIGS. 9 through 13, as one of the bend pulley 40 and 41 is driven by the motor to rotate, the conveyor belt 31 spirally rises from under the first entrance step 35a at the lower entrance/exit positions along the upward moving path 37, passes under the second entrance/exit steps 36a and 36b at the upper entrance/exit positions, and then spirally lowers along the downward moving path 38 to a position under the first exit step 35b at the lower entrance/exit positions to complete a circular trip.

During the trip, the conveyor belt 31 is supported by the first support rollers 33 and the second support rollers 34 abutting it from underneath and guided to move spirally by the guide rollers 32, which rotate and abut lateral edges of the conveyor belt 31.

Thus, with the escalator system illustrated in FIGS. 9 through 13, the conveyor belt 31 contains internal longitudinal members L in the fourth flexible layer 24 located at a transversely central part of the conveyor belt 31 in order to maintain the tensile strength of the belt in the moving direction that may be curved and secure the lateral flexibility of the belt 31. Additionally, the plurality of guide rollers 32 and the plurality of support rollers 33 and 34 of the escalator system spirally guide the conveyor belt 31 between the lower entrance/exit positions and the upper entrance/exit positions so that two points showing a level difference can be linked with a slope showing a gradient less than that of the road for testing the stopping performance of wheel chairs without requiring a large space for installation.

Therefore, the pedestrian overpass or the steps in railway stations can be replaced by escalator systems as shown in FIGS. 9 through 13 to allow wheel chair riders and aged people to move with ease between any two points showing a level difference.

When the bend pulley 40 is driven to move and turn the endless conveyor belt 31, the rotary motion of the bend pulley 40 is surely transmitted to the entire conveyor belt 31 by means of the longitudinal members L in the fourth flexible layer 24 so that the flexible layers 21, 22, 23, and 24 are not subjected to any excessive force.

The present invention is by no means limited to the above described embodiments, which may be modified and/or altered appropriately without departing from the scope of the present invention. For instance, the flexible belt may include only a single intermediate layer that contains reinforcement members therein. The outer flexible layer of the flexible belt may be made free from grooves so that the belt may be used for conveying goods. The drive mechanism may be located not at the lower entrance/exit positions but at the upper entrance/exit positions. Alternatively, the upper entrance/exit positions and the lower entrance/exit positions may be provided with respective drive mechanisms.

In short, the present invention provides the following advantages.
(1) A flexible belt according to the invention contains internal longitudinal members in the inner flexible layer located at a transversely central part of the outer and intermediate flexible layers so that the tensile strength of the belt in the moving direction thereof that may be curved is maintained and the lateral flexibility of the belt is secured.
(2) With a conveyor system according to the invention, a plurality of guide rollers are made to abut lateral edges of the conveyor belt containing internal longitudinal members in a transversely central part thereof from the corresponding lateral sides in order to allow the conveyor belt to turn laterally so that the carrier side moving path of the conveyor belt can be made to meander and the freedom with which a conveyor system according to the invention is installed can be remarkably improved.
(3) With an escalator system according to the invention, the conveyor belt is made to contain internal longitudinal members in the inner layer located at a transversely central part of the conveyor belt in order to maintain the tensile strength of the belt in the moving direction that may be curved and secure the lateral flexibility of the belt, and a plurality of guide rollers and a plurality of support rollers are provided to spirally guide the conveyor belt between the lower entrance/exit positions and the upper entrance/exit positions so that two points showing a level difference can be linked with a slope showing a gradient less than that of the road for testing the stopping performance of wheel chairs without requiring a large space for installation.
(4) Therefore, the pedestrian overpass or the steps in railway stations can be replaced by escalator systems according to the invention to allow wheel chair riders and aged people to move with ease between any two points showing a level difference.

## Claims

1. A flexible belt comprising an outer flexible layer adapted to receive an object to be conveyed on one of surfaces thereof, an intermediate flexible layer provided with internal reinforcement members extending transversely relative to the belt and arranged in a moving direction of the belt, said intermediate flexible layer having one of surfaces thereof held in tight contact with the other surface of the outer flexible layer, and an inner flexible layer provided with internal longitudinal members extending in the moving direction of the belt, said inner flexible layer having one of surfaces thereof held in tight contact with a transversely central part of the other surface of the intermediate flexible layer.

2. A conveyor system comprising an endless conveyor belt provided with internal longitudinal members extending in a moving direction of the belt and arranged at a transversely central part thereof, a pair of pulleys arranged respectively at a conveyance starting point and a conveyance terminating point, said conveyor belt being wound around said pulleys, and a plurality of guide rollers arranged at necessary points between the conveyance starting point and the conveyance terminating point, said guide rollers being adapted to rotatably abut lateral edges of the conveyor belt so as to allow the belt to move along a curved track.

3. A conveyor system comprising an endless conveyor belt having an outer flexible layer adapted to receive an object to be conveyed on one of surfaces thereof, an intermediate flexible layer provided with internal reinforcement members extending transversely relative to the belt and arranged in a moving direction of the belt, said intermediate flexible layer having one of surfaces thereof held in tight contact with the other surface of the outer flexible layer, and an inner flexible layer provided with internal longitudinal members extending in the moving direction of the belt, said inner flexible layer having one of surfaces thereof held in tight contact with a transversely central part of the other surface of the intermediate flexible layer, a pair of pulleys arranged respectively at a conveyance starting point and a conveyance terminating point, said conveyor belt being wound around said pulleys, and a plurality of guide rollers arranged at necessary points between the conveyance starting point and the conveyance terminating point, said guide rollers being adapted to rotatably abut lateral edges of the conveyor belt so as to allow the belt to move along a curved track.

4. An escalator system comprising an endless conveyor belt provided with internal longitudinal members extending in a moving direction of the belt and arranged at a transversely central part thereof, a plurality of guide rollers, being rotatably held in contact with lateral edges of the conveyor belt, a plurality of support rollers abutting a lower surface of the conveyor belt, said guide rollers and said support rollers being arranged at positions adapted to guide the conveyor belt spirally from a lower entrance position to an upper exit position to form an upward moving path and also guide the conveyor belt spirally from an upper entrance position to a lower exit position to form a downward moving path, and a drive mechanism arranged at least at the lower entrance/exit positions or at the upper entrance/exit positions in order to drive the conveyor belt to move in the longitudinal direction thereof.

5. An escalator system comprising an endless conveyor belt having an outer flexible layer adapted to receive an object to be conveyed on one of surfaces thereof, an intermediate flexible layer provided with internal reinforcement members extending transversely relative to the belt and arranged in a moving direction of the belt, said intermediate flexible layer having one of surfaces thereof held in tight contact with the other surface of the outer flexible layer, and an inner flexible layer provided with internal longitudinal members extending in the moving direction of the belt, said inner flexible layer having one of surfaces thereof held in tight contact with a transversely central part of the other surface of the intermediate flexible layer, a plurality of guide rollers, being rotatably held in contact with lateral edges of the conveyor belt, a plurality of support rollers abutting a lower surface of the conveyor belt, said guide rollers and said support rollers being arranged at positions adapted to guide the conveyor belt spirally from a lower entrance position to an upper exit position to form an upward moving path and also guide the conveyor belt spirally from an upper entrance position to a lower exit position to form a downward moving path, and a drive mechanism arranged at least at the lower entrance/exit positions or at the upper entrance/exit positions in order to drive the conveyor belt to move in the longitudinal direction thereof.
